# EUROPEAN PATENT APPLICATION

(11) **EP 4 797 352 A1**
(43) Date of publication of application: **26.08.2026**
(21) Application number: 25864532.4
(22) Date of filing: 30.12.2025
(51) Int. Cl.: H01M 4/36, C01B 32/05, C01B 33/021, H01M 4/13, H01M 4/133, H01M 4/134, H01M 10/0525

(54) **SILICON-CARBON PARTICLE, NEGATIVE ELECTRODE SHEET, AND BATTERY**

(30) Priority: 30.12.2024 CN 202411972382
(71) Applicant: Zhuhai Cosmx Power Battery Co., Ltd., Zhuhai, Guangdong 519180 (CN)
(72) Inventor: XUE, Jiachen, Zhuhai, Guangdong 519180 (CN); WANG, Hui, Zhuhai, Guangdong 519180 (CN)
(74) Representative: Murgitroyd & Company
(86) International application number: PCT/CN2025/147208
(87) International publication number: WO 2026/145536

(57) **Abstract**

The present disclosure relates to the technical field of batteries, and specifically to silicon-carbon particles, a negative electrode plate, and a battery. The present disclosure provides silicon-carbon particles, wherein the surface of the silicon-carbon particles has recessed portions; the number N of the recessed portions on the surface of the silicon-carbon particles is ≥1; the diameter of the recessed portions is 0.05 µm-5 µm; the depth of the recessed portions is 10nm-5µm. By providing recessed portions on the surface of the silicon-carbon particles, the present disclosure is beneficial for improving the cycling stability and expansion performance of silicon-based negative electrode materials.

## Description

### TECHNICAL FIELD

The present disclosure relates to the technical field of batteries, and specifically to silicon-carbon particles, a negative electrode plate, and a battery.

### BACKGROUND

With the rapid growth in demand for consumer electronics, electric vehicles, and energy storage stations, traditional graphite materials as battery negative electrodes are increasingly inadequate to meet the rising requirements for energy density in lithium-ion batteries. In this context, the use of silicon-based negative electrode materials with a higher theoretical lithium storage capacity has become an important avenue for further enhancing the energy density of lithium-ion batteries.

However, the existing silicon-based negative electrode materials suffer from issues such as high volume expansion rates of particles and severe surface side reactions during cycling. This also leads to the repeated formation of a side reaction layer (SEI film) on the silicon-based negative electrode material during cycling, resulting in an overly thick side reaction film, which rapidly consumes active lithium ions, accelerates battery cycling decay, affects the cycling service life of the battery, and simultaneously severely deteriorates the expansion performance of the battery. Furthermore, the side reaction film that repeatedly forms on the surface of the existing silicon-based negative electrode materials during cycling can also detach, causing the silicon-based negative electrode material to detach from the already formed conductive network and lose the electrochemical activity. The exposed fresh surface of the silicon-based negative electrode material then continues to undergo side reactions, generating a new side reaction layer (SEI film), ultimately significantly reducing the cycling stability and expansion performance of the lithium-ion battery.

### SUMMARY

The purpose of the present disclosure is to overcome the above problems existing in the prior art and to provide silicon-carbon particles, a negative electrode plate, and a battery. The silicon-based particles provided by the present disclosure are provided with recessed portions on the surface thereof. With such structural design, the cycling stability and expansion performance of batteries using the silicon-carbon particles as a silicon-based negative electrode material can be enhanced.

A first aspect of the present disclosure provides silicon-carbon particles, wherein the surface of the silicon-carbon particles has recessed portions;
the number N of the recessed portions on the surface of the silicon-carbon particles is greater than or equal to 1;
the diameter of the recessed portions is greater than or equal to 0.05 µm and less than or equal to 5 µm;
the depth of the recessed portions is greater than or equal to 10nm and less than or equal to 5µm.

A second aspect of the present disclosure provides a method for preparing the silicon-carbon particles according to the first aspect of the present disclosure, the method comprising:
soaking a porous carbon matrix in a potassium hydroxide solution for a surface treatment, then placing the porous carbon matrix subjected to the surface treatment into a vapor deposition furnace, introducing argon gas and raising the temperature to greater than or equal to 800°C and
less than or equal to 1200°C, thereby generating recessed portions on the surface of the porous carbon matrix, and finally introducing a silicon source gas to deposit nano-silicon within the pores of the porous carbon matrix;
and/or placing a porous carbon matrix into a gas-phase fluidized bed apparatus for a surface fluidization collision treatment, thereby generating recessed portions on the surface of the porous carbon matrix, then placing the material subjected to the surface fluidization collision treatment into a vapor deposition furnace and introducing a silicon source gas to deposit nano-silicon within the pores of the porous carbon matrix;
and/or placing a porous carbon matrix into a ball mill for a ball milling surface modification treatment, thereby generating recessed portions on the surface of the porous carbon matrix, then placing the material subjected to the ball milling surface modification treatment into a vapor deposition furnace and introducing a silicon source gas to deposit nano-silicon within the pores of the porous carbon matrix.

A third aspect of the present disclosure provides a negative electrode plate, wherein the negative electrode plate comprises the silicon-carbon particles according to the first aspect of the present disclosure and/or the silicon-carbon particles prepared by the method according to the second aspect of the present disclosure; the negative electrode plate comprises a negative electrode active coating, the negative electrode active coating comprising the silicon-carbon particles; the ratio N/C of the number N of the recessed portions on the surface of the silicon-carbon particles to the content C% of elemental silicon in the negative electrode active coating is greater than or equal to 0.04 and less than or equal to 10; and/or, C% is greater than or equal to 3% and less than or equal to 70%.

A fourth aspect of the present disclosure provides a battery, the battery comprising a negative electrode plate and an electrolyte, wherein the negative electrode plate is the negative electrode plate according to the third aspect of the present disclosure; the electrolyte comprises a fluorine-containing additive, the fluorine-containing additive comprising at least one of fluoroethylene carbonate, LiBF₄, LiCF₃SO₃, Li(CF₃SO₂)₂N, LiPO₂F₂ and LiDFOB.

By means of the technical solutions described above, the present disclosure has at least the following advantages over the prior art:

By providing recessed portions on the surface of the silicon-carbon particles, the present disclosure, firstly, enables the increase of the reaction area and reaction sites on the surface of the silicon-carbon particles, thereby improving the adhesion and stability between the silicon-carbon particles and the surface SEI film; secondly, enables the provision of an expansion buffer space for the silicon-carbon negative electrode material, improving the expansion performance of the negative electrode, thus significantly benefiting the improvement of the cycling stability and expansion performance of the silicon-based negative electrode material.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

### BRIEF DESCRIPTION OF THE DRAWINGS

FIG. 1 shows an SEM morphology image of the outer surface of silicon-carbon particles according to an example of the present disclosure.
FIG. 2 shows an SEM morphology image of the outer surface of silicon-carbon particles according to an example of the present disclosure.
FIG. 3 shows an SEM cross-sectional morphology image of silicon-carbon particles according to an example of the present disclosure.
FIG. 4 shows an SEM cross-sectional morphology image of silicon-carbon particles according to an example of the present disclosure.

### DETAILED DESCRIPTIONS OF THE EMBODIMENTS

Hereinafter, specific embodiments of the present disclosure will be described in detail. It should be understood that the specific embodiments described herein are only used to illustrate and explain the present disclosure and are not used to limit the present disclosure.

A first aspect of the present disclosure provides silicon-carbon particles, wherein the surface of the silicon-carbon particles has recessed portions;
the number N of the recessed portions on the surface of the silicon-carbon particles is greater than or equal to 1, for example, 1, 2, 3, 4, 5, 6, 7, 8, 9, 10, 11, 12, 13, 14, 15, 16, 17, 18, 19, 20, 21, 22, 23, 24, 25, 26, 27, 28, 29, or 30; the diameter of the recessed portions is greater than or equal to 0.05 µm and less than or equal to 5 µm, for example, 0.05 µm, 0.06 µm, 0.07 µm, 0.08 µm, 0.09 µm, 0.1 µm, 0.2 µm, 0.3 µm, 0.4 µm, 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, 2.5 µm, 3 µm, 3.5 µm, 4 µm, 4.5 µm, or 5 µm; the depth of the recessed portions is 10 nm-5 µm, for example, 10 nm, 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, 1 µm, 1.5 µm, 2 µm, 2.5 µm, 3 µm, 3.5 µm, 4 µm, 4.5 µm, or 5 µm.

In the present disclosure, the expression "the average number N of the recessed portions on the surface of each of silicon-carbon particles is greater than or equal to 1" means that the average number of recessed portions averaged over the all surfaces of silicon-carbon particles is greater than or equal to 1, and does not imply that the surfaces of all silicon-carbon particles have recessed portions. The test method for the number of recessed portions on the surface of the silicon-carbon particles can be determined by observing SEM images of the silicon-carbon particles and counting. Specifically, the silicon-carbon particle powder is first ultrasonicated, then a portion of the powder is picked up and adhered to an SEM sample stage. Subsequently, an SEM electron microscope is used for testing to obtain SEM images. Spherical particles that are fully observable in the images (referring to spherical silicon-carbon particles whose shape and structure are displayed completely and are easy to observe) are selected. The total number of recessed portions observable on their surface is multiplied by 2 (multiplied by 2 because in the SEM image only the front side of the spherical silicon-carbon particles can be observed; the number of recessed portions on the back side, which cannot be directly observed, is assumed to be the same as that on the front side. Therefore, the total number of observable surface recessed portions is multiplied by 2 to represent the total number of recessed portions on the entire surface of a single silicon-carbon particle). Then, dividing by the number of observed particles yields the average number N of recessed portions on the surface of each of silicon-carbon particles. This number N must be greater than or equal to 1, where N is an integer, rounded to the nearest whole number. Furthermore, it should be noted that since in the SEM images, only the number of recessed portions on one side of the silicon-carbon particles from a front view can be observed, and the number of recessed portions on the back side of the same silicon-carbon particles cannot be accurately observed, the number of recessed portions on the surface of the silicon-carbon particles in the present disclosure only represents the number of recessed portions on the side surface from the front view in SEM testing. Among these, the observable recessed portions located at the edge of the side surface from the front view are also counted in the number of recessed portions for those silicon-carbon particles.

By providing recessed portions on the surface of the silicon-carbon particles in the present disclosure, on one hand, the presence of recessed portions enables the exposure of more surface area, increasing the reaction area and reaction sites on the surface of the silicon-carbon particles, thereby enhancing the specific surface area and surface roughness of the silicon-carbon particles, which thus can improve the adhesion and stability between the silicon-carbon particles and the surface SEI film; on the other hand, the recessed portions have an anchoring effect on the SEI film on the surface of the silicon-carbon particles, effectively increasing the adhesion area between the surface of the silicon-carbon particles and the SEI film. This mitigates the issue of easy detachment of the SEI film from the surface of the silicon-carbon particles, reduces the repeated formation of new SEI films, decreases the consumption of active lithium ions, thereby improving the electrochemical performance of the lithium-ion battery, and significantly benefiting the enhancement of cycling stability and expansion performance of the silicon-based negative electrode material.

Further, since the recessed portions have an anchoring effect on the SEI film, the greater the number of recessed portions, the stronger the anchoring effect on the SEI film, and the recessed portions can expose more surface area of the silicon-carbon negative electrode material. Therefore, by controlling the number N of recessed portions on the surface of the silicon-carbon particles to be greater than or equal to 1, the present disclosure enables the further increase of the adhesion area and anchoring strength between the silicon-carbon particles and the SEI film, thereby mitigating the issue of SEI film detachment from the surface of the silicon-carbon particles, reducing the repeated formation of new SEI films, thus reducing the consumption of active lithium ions and further improving the cycling stability and expansion performance of the silicon-based negative electrode material.

Moreover, by controlling the average number N of recessed portions on the surface of the silicon-carbon particles to be greater than or equal to 1, the contact area between the silicon-carbon particles and the electrolyte can also be increased, facilitating electrolyte infiltration and storage, and additionally, facilitating the improvement of the adhesion property between the silicon-carbon particles and the binder, enhancing the adhesion force and adhesion strength between silicon-carbon particles, which helps to further improve the structural stability and cycling stability of the silicon-carbon negative electrode material.

In an example, the average number N of the recessed portions on the surface of the silicon-carbon particles is greater than or equal to 4 and less than or equal to 20.

In the present disclosure, the diameter of the recessed portions is greater than or equal to 0.05 µm and less than or equal to 5 µm, and the depth of the recessed portions is greater than or equal to 10 nm and less than or equal to 5 µm. Controlling the diameter of the recessed portions within this range is conducive to the stability of SEI film formation on the surface of the silicon-carbon particles, preventing SEI film detachment; if the diameter of the recessed portions is greater than 5 µm, excessively large recessed portions may cause relatively severe damage to the surface of the silicon-carbon particles, leading to more severe breakage of the silicon-carbon particles after cycling, which exacerbates side reactions in the electrolyte and reduces the cycling stability of the battery; more seriously, if the broken silicon-carbon particles produce sharp edges, they can directly puncture the separator, posing a risk of internal short circuit in the battery; if the diameter of the recessed portions is less than 0.05 µm, their anchoring effect on the SEI film diminishes, and the increased reaction surface area also decreases accordingly, failing to well enhance the adhesion area and adhesion stability between the silicon-carbon particles and the SEI, and the improvement effect on the cycling stability and expansion performance of the silicon-carbon negative electrode material is insufficient. Therefore, it is necessary to control the diameter of the recessed portions within an appropriate range.

In an example, the average diameter of the recessed portions is greater than or equal to 0.1 µm and less than or equal to 2 µm.

Similarly, controlling the depth of the recessed portions within this range is also conducive to the stability of SEI film formation on the surface of the silicon-carbon particles, preventing SEI film detachment; moreover, the deeper the recessed portion, the more severe the damage to the surface of the silicon-carbon particles. Therefore, it is necessary to control the depth of the recessed portions within an appropriate range.

In an example, the average depth of the recessed portions is greater than or equal to 50 nm and less than or equal to 1 µm.

The test method for the diameter and depth of the recessed portions on the surface of the silicon-carbon particles can also be determined by observing the SEM images of the silicon-carbon particles and performing statistical analysis. Specifically, the silicon-carbon particle powder is first ultrasonicated, then a portion of the powder is picked up and adhered to an SEM sample stage. Subsequently, an SEM electron microscope is used for testing to obtain SEM images. Spherical particles that are fully observable in the images (referring to spherical silicon-carbon particles whose shape and structure are displayed completely and are easy to observe) are selected. The diameters of several sets (generally greater than or equal to 3 sets and less than or equal to 10 sets) of recessed portions on the particle surface that have a complete planar shape are measured, and the average value is taken as the diameter of the recessed portions on the surface of the silicon-carbon particles; the depths of observable recessed portions at the edge of the particle surface are measured, and the average value is taken as the depth of the recessed portions on the surface of the silicon-carbon particles.

In the present disclosure, the average particle size of the silicon-carbon particles is greater than or equal to 4 µm and less than or equal to 18 µm, for example, 4 µm, 5 µm, 6 µm, 7 µm, 8 µm, 9 µm, 10 µm, 11 µm, 12 µm, 13 µm, 14 µm, 15 µm, 16 µm, 17 µm, or 18 µm. The test method for the average particle size of the silicon-carbon particles is as follows: a battery using the silicon-carbon particles as the negative electrode active material is discharged from a fully charged state to an empty state, disassembled to remove the negative electrode plate using the silicon-carbon particles as the negative electrode active material, then rinsed in an electrolyte solvent, followed by water washing and drying, to obtain a negative electrode powder containing the silicon-carbon particles. Observation is conducted under an SEM electron microscope in backscatter mode. 30 complete light-colored silicon-carbon particles are randomly selected, their diameters are measured, and the average of all test results is taken as the average particle size of the silicon-carbon particles.

In an example, the average particle size of the silicon-carbon particles is greater than or equal to 6 µm and less than or equal to 15 µm.

In the present disclosure, the median particle size Dv50 of the silicon-carbon particles is greater than or equal to 5 µm and less than or equal to 25 µm, for example, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, or 25 µm. The median particle size Dv50 of the silicon-carbon particles can be measured using a Malvern particle size analyzer. The test steps are as follows: The silicon-carbon particles are dispersed in deionized water containing a dispersant (such as nonylphenol ethoxylate, with a content of greater than or equal to 0.02 wt% and less than or equal to 0.03 wt%) to form a mixture. The mixture is ultrasonicated for about 2 minutes, then placed into the Malvern particle size analyzer for testing to obtain the median particle size Dv50 of the silicon-carbon particles.

In an example, the median particle size Dv50 of the silicon-carbon particles is greater than or equal to 8 µm and less than or equal to 20 µm.

The smaller the average particle size of the silicon-carbon particles, the larger the proportion of the surface area of the recessed portions on the surface of the silicon-carbon particles relative to the total surface area of the silicon-carbon particles. Consequently, the surface roughness of the single silicon-carbon particle increases, the anchoring effect is enhanced, and the number of reaction sites increases, but the damage to the surface also becomes more severe. Therefore, the average particle size of the silicon-carbon particles should not be too small; conversely, when the average particle size of the silicon-carbon particles is larger, the proportion of the surface area of the recessed portions on the surface of the silicon-carbon particles relative to the total surface area of the silicon-carbon particles becomes smaller, the surface roughness of the single silicon-carbon particle decreases, the anchoring effect weakens, and there remains a risk of the SEI film detaching from the surface of the silicon-carbon particles in later stages of cycling. Therefore, it is necessary to reasonably control the average particle size of the silicon-carbon particles.

Dv50 in the median particle size Dv50 of the silicon-carbon particles refers to the particle size corresponding to the point where the cumulative volume percentage of the particle size distribution reaches 50%. That is, 50% of the particles by volume have a size larger than this value, and 50% have a size smaller than this value. Therefore, by controlling the median particle size Dv50 of the silicon-carbon particles, the contact area between the silicon-carbon particles, when used as a silicon-carbon negative electrode material, and the electrolyte can be better controlled, facilitating the improvement of electrolyte infiltration into the negative electrode active material and the storage capacity of the electrolyte by the negative electrode active material; furthermore, by controlling the median particle size Dv50 of the silicon-carbon particles, the adhesive properties between the silicon-carbon particles and the binder can be improved, enhancing the adhesion force and adhesion strength between silicon-carbon particles, which helps to further improve the structural stability and electrochemical performance of the silicon-carbon negative electrode material.

In the present disclosure, the average sphericity of the silicon-carbon particles is greater than or equal to 0.5 and less than or equal to 1, for example, 0.5, 0.65, 0.75, 0.8, 0.85, 0.86, 0.87, 0.88, 0.89, 0.9, 0.95, 0.96, 0.97, 0.98, 0.99, or 1; The test method for the average sphericity of the silicon-carbon particles in the present disclosure may include the following steps: firstly a lithium-ion battery is disassembled, a negative electrode plate is removed, soaked with a dimethyl carbonate solvent and rinsed to remove a lithium salt and an electrolyte solvent from the negative electrode plate. After air-drying, a cross-section of the negative electrode plate is obtained by means of argon ion cutting; in the backscatter mode of scanning electron microscope, the silicon-carbon particles show a brighter contrast, and the graphite particles are darker, so the image of each bright spot particle in the SEM backscattering mode photograph of the negative electrode plate at a certain magnification (such as 2500 X) can be calculated by an image processing software (such as Image Pro Plus) to obtain the perimeter and area of each silicon-carbon particle, and the perimeter equivalent radius r1 and area equivalent radius r2 of each particle can be calculated respectively. Then each particle has a sphericity of b = r2/r1, and then the number-weighted average of the sphericity of each particle is calculated, so as to obtain the average sphericity of the silicon-carbon particles in the cross-section of the negative electrode plate.

In an example, the average sphericity of the silicon-carbon particles is greater than or equal to 0.85 and less than or equal to 1.

In the present disclosure, based on the total mass of the silicon-carbon particles, the mass content of the elemental silicon is greater than or equal to 35% and less than or equal to 80%, for example, 35%, 40%, 45%, 50%, 55%, 60%, 65%, 70%, 75%, or 80%. The mass content of the elemental silicon in the silicon-carbon particles in the present disclosure can be obtained by cross-sectional SEM-EDS testing and analysis of the silicon-carbon particles. By controlling the mass content of the elemental silicon in the silicon-carbon particles within the range of greater than or equal to 35% and less than or equal to 80%, the high theoretical lithium storage capacity of silicon can be used to enhance the energy density of the battery; moreover, the exacerbated volume expansion caused by excessive silicon content can be avoided, further ensuring the structural stability of the silicon-carbon particles and the cycling stability of the battery.

In the present disclosure, the silicon-carbon particles comprise a porous carbon matrix and nano-silicon dispersed within the pores of the porous carbon matrix, the nano-silicon having a crystallite size of greater than or equal to 1 nm and less than or equal to 100 nm, for example, 1 nm, 3 nm, 5 nm, 6 nm, 8 nm, 10 nm, 20 nm, 30 nm, 40 nm, 50 nm, 60 nm, 70 nm, 80 nm, 90 nm, or 100 nm. The negative electrode plates and batteries using silicon-carbon particles with the aforementioned special structure can better alleviate the volume changes of the silicon-carbon particles in later stages of cycling, further improving the cycling performance and expansion performance of the battery.

Further, after being subjected to a pressure of 377 MPa, the change rate of the median particle size Dv50 of the silicon-carbon particles is less than or equal to 15%, for example, 15%, 14%, 13%, 12%, 11%, 10%, 9%, 8%, 7%, 6%, 5%, 4%, 3%, 2%, 1%, or 0%. Herein, the change rate of the median particle size Dv50 of the silicon-carbon particles after being subjected to a pressure of 377 MPa refers to the ratio of the difference between the median particle size Dv50 of the silicon-carbon particles before and after being subjected to the 377 MPa pressure to the median particle size Dv50 of the silicon-carbon particles before being subjected to the 377 MPa pressure. In the present disclosure, the specific steps for "the silicon-carbon particles being subjected to a pressure of 377 MPa" are as follows: 1 g of silicon-carbon particles (with their median particle size Dv50 before 377MPa pressure application known) is taken, a pressure of 377 MPa is applied using a powder compaction tester (e.g., a Sansi Zongheng 300 kN microcomputer-controlled electronic powder compaction tester), the pressure is maintained for 30 s, then released, and the powder is taken out. The median particle size Dv50 of the sampled silicon-carbon particles after being subjected to the 377 MPa pressure is measured, and calculate the change rate of the median particle size Dv50 is calculated using the aforementioned formula.

By controlling the change rate of the median particle size Dv50 of the silicon-carbon particles to be no more than 15% in the present disclosure, silicon-carbon particles with higher compressive strength can be screened out, such that the silicon-carbon particles used as a negative electrode active material are less prone to damage after electrode plate rolling, thereby avoiding the decrease in structural stability of the silicon-carbon particles surface caused by the provision of recessed portions, and enhancing the structural stability and cycling performance of the silicon-carbon negative electrode material; moreover, since the silicon-carbon particles have higher compressive strength, the compaction density of the negative electrode plate containing the silicon-carbon negative electrode material can be increased, thereby effectively improving the energy density of the lithium-ion battery.

In an example, the change rate of the median particle size Dv50 of the silicon-carbon particles after being subjected to a pressure of 377 MPa is greater than or equal to 2% and less than or equal to 8%.

In the present disclosure, the change rate of the sphericity of the silicon-carbon particles after being subjected to a pressure of 377 MPa is less than or equal to 10%, for example, 10%, 9%, 8%, 7%, 6%, 5%, 4%, 3%, 2%, 1%, or 0%. Herein, the change rate of the sphericity of the silicon-carbon particles after being subjected to a pressure of 377 MPa refers to the ratio of the difference between the sphericity of the silicon-carbon particles before and after being subjected to the 377 MPa pressure to the sphericity of the silicon-carbon particles before being subjected to the 377 MPa pressure. By controlling the change rate of the sphericity of the silicon-carbon particles after rolling to be no more than 10%, the silicon-carbon particles can maintain their original relatively regular spherical geometric shape after rolling, possessing a relatively stable structure, thereby increasing the close packing degree of the silicon-carbon particles and improving the density of the silicon-carbon negative electrode material.

In an example, the change rate of the sphericity of the silicon-carbon particles after being subjected to a pressure of 377 MPa is greater than or equal to 1%-4%.

The sphericity of the silicon-carbon particles represents the spherical state of the silicon-carbon particles. The higher the sphericity, the closer the silicon-carbon particles are to an ideal spherical state. The test method is as follows: The images of individual particles in SEM images of silicon-carbon particles at a certain magnification (e.g., 2500x) are analyzed using an image processing software (e.g., Image Pro Plus) to obtain the perimeter and area of each particle. The perimeter-equivalent radius r1 and area-equivalent radius r2 for each particle are calculated such that the sphericity S of each particle is then S=r2/r1. The sphericity values of all particles are then averaged by number weighting to obtain the average sphericity of the silicon-carbon particles. Then, by calculating the average sphericity before and after being subjected to the 377 MPa pressure, the change rate of the sphericity % of the silicon-carbon particles can be obtained. The change rate of sphericity % = (Average sphericity of silicon-carbon particles before rolling - Average sphericity of silicon-carbon particles after rolling) / Average sphericity of silicon-carbon particles before rolling × 100%.

A second aspect of the present disclosure provides a method for preparing the silicon-carbon particles according to the first aspect of the present disclosure, the method comprising: soaking a porous carbon matrix in a potassium hydroxide solution for a surface treatment, then placing the porous carbon matrix subjected to the surface treatment into a vapor deposition furnace, introducing argon gas and raising the temperature to greater than or equal to 800°C and less than or equal to 1200°C (for example, 800°C, 900°C, 1000°C, 1100°C, or 1200°C), thereby generating recessed portions on the surface of the porous carbon matrix, and finally introducing a silicon source gas to deposit nano-silicon within the pores of the porous carbon matrix.

Specifically, 30 g of porous carbon is soaked in a potassium hydroxide solution with a concentration of greater than or equal to 0.8 mol/L and less than or equal to 2 mol/L (for example, 0.8 mol/L, 0.9 mol/L, 1 mol/L, 1.1 mol/L, 1.2 mol/L, 1.3 mol/L, 1.4 mol/L, 1.5 mol/L, 1.6 mol/L, 1.7 mol/L, 1.8 mol/L, 1.9 mol/L, or 2 mol/L) for greater than or equal to 6 h and less than or equal to 12 h (for example, 6 h, 7 h, 8 h, 9 h, 10 h, 11 h, or 12 h). Subsequently, it is taken out, washed, and dried. Then, the porous carbon is placed in a vapor deposition furnace. First, argon gas is introduced with the temperature raising to greater than or equal to 800°C and less than or equal to 1200°C (for example, 800°C, 900°C, 1000°C, 1100°C, or 1200°C) and maintained for greater than or equal to 2 h and less than or equal to 5 h (for example, 2 h, 3 h, 4 h, or 5 h) to create surface pits. The furnace temperature is then controlled to greater than or equal to 400°C-500°C (for example, 400°C, 410°C, 420°C, 430°C, 440°C, 450°C, 460°C, 470°C, 480°C, 490°C, or 500°C). Subsequently, silane gas with a flow rate of 100 sccm-500 sccm (for example, 100 sccm, 200 sccm, 300 sccm, 400 sccm, or 500 sccm) is introduced for greater than or equal to 2 h and less than or equal to 8 h (for example, 2 h, 3 h, 4 h, 5 h, 6 h, 7 h, or 8 h). After completion, the introduction of silane is stopped, and the temperature is raised to greater than or equal to 500°C and less than or equal to 600°C (for example, 500°C, 510°C, 520°C, 530°C, 540°C, 550°C, 560°C, 570°C, 580°C, 590°C, or 600°C). An acetylene gas with a flow rate of 80 sccm-150 sccm (for example, 80 sccm, 90 sccm, 100 sccm, 110 sccm, 120 sccm, 130 sccm, 140 sccm, or 150 sccm) is introduced, and the acetylene cracking duration is controlled to be greater than or equal to 0.5 h and less than or equal to 2 h (for example, 0.5 h, 1 h, 1.5 h, or 2 h). Then, the acetylene flow is stopped, with cooling to obtain silicon-carbon particles with recessed portions on the surface.

A second aspect of the present disclosure provides a method for preparing the silicon-carbon particles according to the first aspect of the present disclosure, the method comprising: placing a porous carbon matrix into a gas-phase fluidized bed apparatus for a surface fluidization collision treatment, thereby generating recessed portions on the surface of the porous carbon matrix, then placing the material subjected to the surface fluidization collision treatment into a vapor deposition furnace and introducing a silicon source gas to deposit nano-silicon within the pores of the porous carbon matrix.

Specifically, 60 g of porous carbon is placed into a gas-phase fluidized bed apparatus and fluidized at a high speed at room temperature for greater than or equal to 1 h and less than or equal to 5 h (for example, 1 h, 2 h, 3 h, 4 h, or 5 h). After fluidization collision, recesses are generated on the surface of the particles. Then, 30 g of the product after fluidization collision is placed into a CVD vapor deposition furnace. First, argon gas is introduced with the temperature raising to greater than or equal to 400°C and less than or equal to 500°C (for example, 400°C, 410°C, 420°C, 430°C, 440°C, 450°C, 460°C, 470°C, 480°C, 490°C, or 500°C). Subsequently, silane gas with a flow rate of greater than or equal to 100 sccm-500 sccm (for example, 100 sccm, 150 sccm, 200 sccm, 250 sccm, 300 sccm, 350 sccm, 400 sccm, 450 sccm, or 500 sccm) is introduced for greater than or equal to 2 h-8 h (for example, 2 h, 3 h, 4 h, 5 h, 6 h, 7 h, or 8 h). After completion, the introduction of silane is stopped, and the temperature is raised to greater than or equal to 500°C-600°C (for example, 500°C, 510°C, 520°C, 530°C, 540°C, 550°C, 560°C, 570°C, 580°C, 590°C, or 600°C). An acetylene gas with a flow rate of greater than or equal to 80 sccm-150 sccm (for example, 80 sccm, 90 sccm, 100 sccm, 110 sccm, 120 sccm, 130 sccm, 140 sccm, or 150 sccm) is introduced, and the acetylene cracking duration is controlled to be greater than or equal to 0.5 h and less than or equal to 2 h (for example, 0.5 h, 1 h, 1.5 h, or 2 h). Then, the acetylene flow is stopped, with cooling to obtain silicon-carbon particles with recessed portions on the surface.

A second aspect of the present disclosure provides a method for preparing the silicon-carbon particles according to the first aspect of the present disclosure, the method comprising: placing a porous carbon matrix into a ball mill for a ball milling surface modification treatment, thereby generating recessed portions on the surface of the porous carbon matrix, then placing the material subjected to the ball milling surface modification treatment into a vapor deposition furnace and introducing a silicon source gas to deposit nano-silicon within the pores of the porous carbon matrix.

Specifically, 50 g of porous carbon is placed into a ball mill for low-speed ball milling surface modification. The zirconia balls with a diameter of 1 mm are used, with a ball-to-material ratio of 1: 25, a rotational speed of the planetary ball milling of greater than or equal to 10 and less than or equal to 50 rpm (for example, 10 rpm, 20 rpm, 30 rpm, 40 rpm, or 50 rpm), a milling duration of greater than or equal to 20 min and less than or equal to 40 min (for example, 20 min, 25 min, 30 min, 35 min, or 40 min). 30 g of product subjected to the ball milling surface modification is placed into a CVD vapor deposition furnace. First, argon gas is introduced with the temperature raising to greater than or equal to 400°C and less than or equal to 500°C (for example, 400°C, 410°C, 420°C, 430°C, 440°C, 450°C, 460°C, 470°C, 480°C, 490°C, or 500°C). Subsequently, silane gas with a flow rate of greater than or equal to 100 sccm and less than or equal to 500 sccm (for example, 100 sccm, 200 sccm, 300 sccm, 400 sccm, or 500 sccm) is introduced for greater than or equal to 2 h and less than or equal to 8 h (for example, 2 h, 3 h, 4 h, 5 h, 6 h, 7 h, or 8 h). After completion, the introduction of silane is stopped, and the temperature is raised to greater than or equal to 500°C and less than or equal to 600°C (for example, 500°C, 510°C, 520°C, 530°C, 540°C, 550°C, 560°C, 570°C, 580°C, 590°C, or 600°C). An acetylene gas with a flow rate of greater than or equal to 80 sccm and less than or equal to 150 sccm (for example, 80 sccm, 90 sccm, 100 sccm, 110 sccm, 120 sccm, 130 sccm, 140 sccm, or 150 sccm) is introduced, and the acetylene cracking duration is controlled to be greater than or equal to 0.5 h and less than or equal to 2 h (for example, 0.5 h, 1 h, 1.5 h, or 2 h). Then, the acetylene flow is stopped, with cooling to obtain silicon-carbon particles with recessed portions on the surface.

In the present disclosure, the method for preparing the silicon-carbon particles can be any one or more of the aforementioned three methods.

A third aspect of the present disclosure provides a negative electrode plate, wherein the negative electrode plate comprises the silicon-carbon particles according to the first aspect of the present disclosure and/or the silicon-carbon particles prepared by the method according to the second aspect of the present disclosure, the negative electrode plate comprises a negative electrode active coating, the negative electrode active coating comprising the silicon-carbon particles; the ratio N/C of the average number N of the recessed portions on the surface of the silicon-carbon particles to the content C% of the elemental silicon in the negative electrode active coating is greater than or equal to 0.04 and less than or equal to 10, for example, 0.04, 0.06, 0.08, 0.1, 0.2, 0.3, 0.4, 0.5, 0.6, 0.7, 0.8, 0.9, 1, 2, 3, 4, 5, 6, 7, 8, 9, or 10. Furthermore, it should be noted that when substituting the content C% of the elemental silicon in the negative electrode active coating into the ratio N/C for calculation, the dimensionless numerical value is substituted. For example, C=40, N=20, then the ratio N/C=0.5.

In an example, the ratio N/C of the average number N of the recessed portions on the surface of each of the silicon-carbon particles to the content C% of the elemental silicon in the negative electrode active coating is greater than or equal to 2 and less than or equal to 6.

In the present disclosure, the content C% of the elemental silicon in the negative electrode active coating is greater than or equal to 3% and less than or equal to 70%, for example, 3%, 5%, 7%, 9%, 10%, 20%, 30%, 40%, 50%, 60%, or 70%. The content C% of the elemental silicon in the negative electrode active coating can be measured by inductively coupled plasma optical emission spectrometry (ICP).

In an example, the content C% of the elemental silicon in the negative electrode active coating is greater than or equal to 4% and less than or equal to 50%.

The elemental silicon in the negative electrode active coating originates from the silicon-carbon particles. If the content C of the elemental silicon in the negative electrode active coating is too large, it indicates a high content of silicon-carbon particles in the negative electrode active coating, which can easily cause expansion of the negative electrode active coating. Severe expansion may even lead to battery failure. Since providing at least one recessed portion on the surface of the silicon-carbon particles can correspondingly reduce the content of the elemental silicon in the negative electrode active coating, when the ratio N/C of the average number N of the recessed portions on the surface of each of the silicon-carbon particles to the content C of the elemental silicon in the negative electrode active coating is within an appropriate range, it can ensure that the content C of the elemental silicon in the negative electrode active coating is not excessive, achieving the goals of suppressing negative electrode expansion and improving battery energy density and can also avoid having too many recessed portions, which would cause excessive defects on the surface of the silicon-carbon particles and potential damage after multiple cycles, and avoid the repeated formation of new SEI films on the surface of the negative electrode active coating, thereby improving the battery cycling performance; moreover, the provision of recessed portion structures can provide an expansion buffer space for the silicon-carbon negative electrode material, which is beneficial for improving the expansion performance of the negative electrode.

In an example, the negative electrode active coating further comprises a carbon-based negative electrode material, the carbon-based negative electrode material comprising at least one of artificial graphite, natural graphite, mesocarbon microbeads, hard carbon, and soft carbon.

In an example, the negative electrode active coating further comprises a negative electrode conductive agent and a negative electrode binder, the negative electrode conductive agent comprising at least one of conductive carbon black (SuperP) and single-walled carbon nanotubes (SWCNTs), and the negative electrode binder comprising at least one of sodium carboxymethyl cellulose (CMC-Na) and styrene-butadiene rubber.

In an example, based on the total weight of the negative electrode active coating, the weight content of the silicon-carbon particles is greater than or equal to 2% and less than or equal to 50% (for example, 2%, 3%, 4%, 5%, 10%, 15%, 20%, 25%, 30%, 35%, 40%, 45%, or 50%), the weight content of the carbon-based negative electrode material is greater than or equal to 47% and less than or equal to 97% (for example, 47%, 48%, 49%, 50%, 55%, 60%, 65%, 70%, 75%, 80%, 85%, 90%, 95%, or 97%), the weight content of the negative electrode conductive agent is greater than or equal to 0.2% and less than or equal to 3% (for example, 0.2%, 0.3%, 0.4%, 0.5%, 1%, 1.5%, 2%, 2.5%, or 3%), and the weight content of the negative electrode binder is greater than or equal to 0.5% and less than or equal to 4% (for example, 0.5%, 1%, 1.5%, 2%, 2.5%, 3%, 3.5%, or 4%).

A fourth aspect of the present disclosure provides a battery, the battery comprising a negative electrode plate and an electrolyte, the negative electrode plate being the negative electrode plate according to the third aspect of the present disclosure; the electrolyte comprises a fluorine-containing additive, the fluorine-containing additive comprising at least one of fluoroethylene carbonate, LiBF₄, LiCF₃SO₃, Li(CF₃SO₂)₂N, LiPO₂F₂ and LiDFOB. Using silicon-carbon particles as the silicon-carbon negative electrode material in the negative electrode active coating of the battery negative electrode plate can effectively improve the cycling capacity retention rate and cycling expansion rate of the battery.

In the present disclosure, after the battery is cycled for 500 cycles under the conditions of 25°C, a charge/discharge cutoff voltage of greater than or equal to 3.0V and less than or equal to 4.53V, 1C charge, and 1C discharge, and then disassembled in a fully charged state: the average thickness of the SEI film on the surface of the silicon-carbon particles is greater than or equal to 100 nm and less than or equal to 800 nm, for example, 100 nm, 200 nm, 210 nm, 220 nm, 230 nm, 240 nm, 250 nm, 300 nm, 350 nm, 400 nm, 450 nm, 500 nm, 550 nm, 600 nm, 650 nm, 700 nm, 750 nm, or 800 nm. The average thickness of the SEI film on the surface of silicon-carbon particles can be determined by observation of the SEM cross-sectional images and calculation. Specifically, after the battery has undergone the aforementioned cycling, the negative electrode plate is disassembled. A powder from the negative electrode active layer of the negative electrode plate is taken and, ultrasonicated, and then a portion of the powder is picked up and adhered to an SEM sample stage. Subsequently, an SEM electron microscope is used for testing to obtain SEM images. Spherical particles that are fully observable in the images (referring to spherical silicon-carbon particles whose shape and structure are displayed completely and are easy to observe) are selected. The thickness of the SEI film is measured at multiple locations on the surface of each selected particle, and the average of these measurement is calculated to represent the average thickness of the SEI film on the surface of the silicon-carbon particles.

In an example, the average thickness of the SEI film on the surface of the silicon-carbon particles is greater than or equal to 300 nm and less than or equal to 700 nm.

In the present disclosure, after the battery is cycled for 500 cycles under the conditions of 25°C, a charge/discharge cutoff voltage of greater than or equal to 3.0V and less than or equal to 4.53V, 1C charge, and 1C discharge, and then disassembled in a fully charged state: the content of the fluorine element in the SEI film on the surface of the silicon-carbon particles is greater than or equal to 1% and less than or equal to 15%, for example, 1%, 2%, 3%, 4%, 5%, 6%, 7%, 8%, 9%, 10%, 11%, 12%, 13%, 14%, or 15%. The content of the fluorine element in the SEI film on the surface of the silicon-carbon particles can be measured by energy-dispersive X-ray spectroscopy (EDS). The source of the fluorine element in the SEI film on the surface of the silicon-carbon particles is the fluorine-containing additive in the electrolyte. The presence of fluorine-containing fluorides in the SEI film is beneficial for improving the stability of the SEI film in the electrolyte and the lithium-ion diffusion capability during charge/discharge processes. Therefore, by controlling the content of the fluorine element in the SEI film on the surface of the silicon-carbon particles, the present disclosure enables the further enhancement of the improvement effect, the increase of the stability of the SEI film in the electrolyte, prevention of detachment from the silicon-carbon particles, and simultaneously improves the lithium-ion diffusion capability during charge/discharge processes, thus constructing a stable and highly conductive network, thereby enhancing the cycling stability and expansion performance of the lithium-ion battery.

In an example, the content of the fluorine element in the SEI film on the surface of the silicon-carbon particles is greater than or equal to 6% and less than or equal to 13%.

In an example, the battery is a lithium-ion battery.

In an example, the battery further comprises a positive electrode plate, a separator, and an electrolyte.

In an example, the positive electrode plate comprises a positive electrode current collector and a positive electrode active coating located on one or both surfaces of the positive electrode current collector, the positive electrode active coating comprising a positive electrode active material, a positive electrode conductive agent, and a positive electrode binder.

In an example, the positive electrode active material comprises at least one of lithium cobalt oxide, a nickel cobalt manganese ternary material, lithium iron phosphate, and lithium manganese iron phosphate.

In an example, the positive electrode conductive agent comprises at least one of acetylene black and carbon nanotubes (CNTs).

In an example, the negative electrode binder comprises at least one of polyvinylidene fluoride (PVDF), sodium carboxymethyl cellulose (CMC), styrene-butadiene rubber (SBR), and polyacrylic acid (PAA).

In an example, the electrolyte further comprises a lithium salt, a carbonate solvent, and other additives.

In an example, the lithium salt comprises at least one of LiPF₆, LiBF₄, LiSbF₆, LiClO₄, LiCF₃SO₃, LiAlO₄, LiAlCl₄, Li(CF₃SO₂)₂N, LiBOB, LiPO₂F₂ and LiDFOB.

In an example, the carbonate solvent comprises at least one of ethylene carbonate (EC), propylene carbonate (PC), diethyl carbonate (DEC), dimethyl carbonate (DMC), and ethyl methyl carbonate (EMC).

In an example, the other additives comprise one or more of 1,3-propanesultone (PS), 1,3-propylene sultone (PST), vinyl ethylene carbonate (VEC), adiponitrile (ADN), succinonitrile (SN), and 1,3,6-hexanetricarbonitrile (HTCN).

In an example, based on the total weight of the electrolyte, the weight content of the lithium salt is greater than or equal to 12% and less than or equal to 35% (for example, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, or 35%), the weight content of the carbonate solvent is greater than or equal to 10% and less than or equal to 60% (for example, 10%, 15%, 20%, 25%, 30%, 35%, 40%, 45%, 50%, 55%, or 60%), the weight content of the other additives is greater than or equal to 3% and less than or equal to 20% (for example, 3%, 4%, 5%, 6%, 7%, 8%, 9%, 10%, 11%, 12%, 13%, 14%, 15%, 16%, 17%, 18%, 19%, or 20%), and the weight content of the fluorine-containing additive is greater than or equal to 3% and less than or equal to 35% (for example, 3%, 4%, 5%, 6%, 7%, 8%, 9%, 10%, 15%, 20%, 25%, 30%, or 35%).

The present disclosure will be described in detail below by means of examples. The examples described in the present disclosure are only some, rather than all, of the examples of the present disclosure. Based on the examples of the present disclosure, all other examples obtained by those of ordinary skill in the art without creative efforts fall within the scope of protection of the present disclosure.

In the following examples, unless otherwise specified, all the materials used are commercially available and analytically pure.

The following examples are used to illustrate the battery of the present disclosure.

### Example 1

Preparation of silicon-carbon particles, a negative electrode plate containing the silicon-carbon particles, and a lithium-ion battery according to a method comprising:

### (1) Preparation of ingredients

Porous carbon: 60 g, particle size Dv10 6.0 µm, Dv50 10 µm, Dv100 28 µm, sphericity S=0.99;
Silane gases: silane and acetylene;
SiC material: 10 parts by weight;
Graphite: artificial graphite, 86.5 parts by weight;
Negative electrode conductive agent: SuperP 0.2 parts by weight; SWCNTs 0.1 parts by weight;
Negative electrode binder: sodium carboxymethyl cellulose 1.6 parts by weight; styrene-butadiene rubber 1.6 parts by weight;
Negative electrode current collector: a copper foil with a thickness of 6 µm.

### (2) Preparation of silicon-carbon particles

30 g of porous carbon was soaked in a potassium hydroxide solution with a concentration of 1.5 mol/L for 12 h, subsequently taken out, washed, and dried. The porous carbon was then placed in a vapor deposition furnace. Firstly, argon gas was introduced with the temperature raising to 1000°C and maintained for 3 h to create surface pits. The temperature was then lowered to 400°C, followed by the introduction of silane gas at a flow rate of 200 sccm for 5 h. After completion, the introduction of silane was stopped, and the temperature was raised to 550°C. An acetylene gas was introduced at a flow rate of 120 sccm, and the acetylene cracking duration was controlled to 1 h. The acetylene flow was then stopped, with cooling to obtain the silicon-carbon particles of this example.

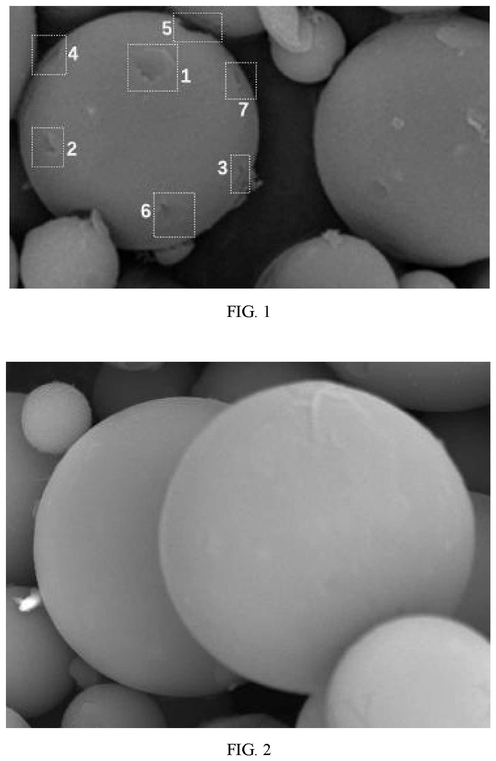

For these silicon-carbon particles, the SEM image of the outer surface is shown in FIG. 1. The number of recessed portions observed on one side was 7. The number of recessed portions on the other side was considered to be the same as that on the observable side. Therefore, the number N of recessed portions on the surface of the silicon-carbon particles was 14. The diameter of the recessed portions was 0.5 µm. The depth of the recessed portions was 0.3 µm.

Furthermore, the average particle size of these silicon-carbon particles was 7 µm. The median particle size Dv50 of the silicon-carbon particles was 9 µm. After being subjected to a pressure of 377 MPa, the change rate of the median particle size Dv50 of the silicon-carbon particles was 5%, and the change rate of sphericity was 3%.

### (3) Preparation of negative electrode plate

The silicon-carbon particles prepared in step (2), artificial graphite, sodium carboxymethyl cellulose, styrene-butadiene rubber, SuperP, and single-walled carbon nanotubes (SWCNTs) were mixed in a ratio of 10:86.5:1.6:1.6:0.2:0.1. Deionized water was added, and stirred under the action of a vacuum stirrer to obtain a negative electrode slurry. The negative electrode slurry was uniformly coated onto both sides of the negative electrode current collector (with a thickness of). The areal density of the negative electrode slurry coated on the surface of the negative electrode current collector was 11.0 mg/cm². The negative electrode current collector coated with the negative electrode slurry was transferred to an 80°C oven and dried for 12 h and then rolled (controlling the compaction density within a range of 1.4-1.8 g/cm³) and slit to obtain the negative electrode plate.

The measured content C% of the elemental silicon in the negative electrode active coating of the negative electrode plate was 4.9%. At this point, the ratio N/C of the number N of recessed portions on the surface of the silicon-carbon particles to the content C% of the elemental silicon in the negative electrode active coating was 2.86.

### (4) Preparation of lithium-ion battery

### 1) Preparation of positive electrode plate

Lithium cobalt oxide (LCO), polyvinylidene fluoride (PVDF), acetylene black, and carbon nanotubes (CNTs) were mixed in a mass ratio of 96:2:1.5:0.5. N-methyl-pyrrolidone was added, and the mixture was stirred under the action of a vacuum stirrer until a homogeneous positive electrode slurry was formed. The positive electrode slurry was uniformly coated onto an aluminum foil with a thickness of 12 µm. The coated aluminum foil above was baked in an oven, then transferred to an oven at 120°C for drying for 8 h, and then subjected to rolling and slitting to obtain the required positive electrode plate. The size of the positive electrode plate is smaller than that of the negative electrode plate, and the reversible capacity per unit area of the positive electrode plate is 5% lower than that of the negative electrode plate.

### 2) Preparation of negative electrode plate

The negative electrode plate from the above example was used.

### 3) Separator

A polyethylene separator with a thickness of 8 µm was selected.

### 4) Electrolyte

In a glove box filled with argon (H₂O < 0.1 ppm, O₂ < 0.1 ppm), EC, PC, PP, and PA were uniformly mixed in a mass ratio of 10/15/55/20. Lithium hexafluorophosphate (LiPF₆) was then quickly added at a content of 14.38% based on the total mass of the electrolyte as the lithium salt. After dissolution, fluoroethylene carbonate was added at a content of 5% based on the total mass of the electrolyte, along with 1,3-propanesultone (PS) at 4%, 1,3,6-hexanetricarbonitrile (HTCN) at 2%, adiponitrile (ADN) at 2%, and succinonitrile (SN) at 1%. The mixture was stirred uniformly. After passing the moisture and free acid tests, the desired electrolyte was obtained.

### 5) Preparation of lithium-ion battery

The positive electrode plate from step 1), the separator from step 3), and the negative electrode plate from step 2) were sequentially stacked to ensure that the separator was between the positive electrode plate and the negative electrode plate and functioned for isolation, and then wound to obtain a bare cell. The bare cell was placed into an aluminum laminate film housing. The electrolyte from step 4) was injected into the dried bare cell. After procedures including vacuum packaging, leaving to stand, formation, shaping, sorting, etc., the desired lithium-ion battery was manufactured.

### Example 2

Example 2 was conducted with reference to Example 1, with the only difference being the change in (2) Preparation of silicon-carbon particles, specifically: 60 g of porous carbon was placed into a gas-phase fluidized bed apparatus and fluidized at a high speed at room temperature for 3 h. After fluidization collision, recesses were generated on the particle surfaces. 30 g of the product after fluidization collision was taken and placed into a CVD vapor deposition furnace. Firstly, argon gas was introduced with the temperature raising to 400°C and subsequently, silane gas was introduced at a flow rate of 200 sccm for 5 h each. After completion, the introduction of silane was stopped, and the temperature was raised to 550°C. Acetylene gas was introduced at a flow rate of 120 sccm, and the acetylene cracking duration was controlled to 1 h. The acetylene flow was then stopped, with cooling to obtain the silicon-carbon particles of this example, see Table 1 for details.

### Example 3

Example 3 was conducted with reference to Example 1, with the only difference being the change in(2) Preparation of silicon-carbon particles, specifically: 50 g of porous carbon was placed into a ball mill for low-speed ball milling surface modification. Zirconia balls with a diameter of 1 mm were used, with a ball-to-material ratio of 1: 25, a rotational speed of the planetary ball milling of 10 rpm, and a ball milling duration of 30 min. 30 g of the ball-milled product was taken and placed into a CVD vapor deposition furnace. Firstly, argon gas was introduced with the temperature raising to 400°C and subsequently, silane gas was introduced at a flow rate of 200 sccm for 5 h each. After completion, the introduction of silane was stopped, and the temperature was raised to 550°C. Acetylene gas was introduced at a flow rate of 120 sccm, and the acetylene cracking duration was controlled to 1 h. The acetylene flow was then stopped, with cooling to obtain the silicon-carbon particles of this example, see Table 1 for details.

### Example 4 group

Example 4 group was conducted with reference to Example 2, with the only difference being the change in (2) Preparation of silicon-carbon particles, specifically: the fluidization temperature, fluidization gas flow rate, and fluidization time of the gas-phase fluidized bed apparatus were adjusted, causing changes in the number N of recessed portions on the surface of the silicon-carbon particles, and the diameter and depth of the recessed portions, see Table 1 for details.

### Example 5 group

Example 5 group was conducted with reference to Example 2, with the only difference being the change in (1) Preparation of ingredients, specifically: the particle size of the raw material porous carbon was changed, causing changes in the average particle size and median particle size Dv50 of the silicon-carbon particles, see Table 1 for details.

### Example 6 group

Example 6 group was conducted with reference to Example 2, with the only difference being the change in (3) Preparation of negative electrode plate, specifically: the addition amount of silicon-carbon particles in the negative electrode active coating was changed, causing a change in the content C% of the elemental silicon in the negative electrode active coating, see Table 1 for details.

### Example 7 group

Example 7 group was conducted with reference to Example 2, with the only difference being the change in (2) Preparation of silicon-carbon particles, specifically: the number N of recessed portions on the surface of the silicon-carbon particles, the diameter and depth of the recessed portions, and the content C% of the elemental silicon in the negative electrode active coating were all changed, see Table 1 for details.

### Comparative example 1

Comparative Example 1 was conducted with reference to Example 2, with the only difference being the change in (2) Preparation of silicon-carbon particles, specifically: the raw material porous carbon was not placed into the gas-phase fluidized bed to create recesses. 30 g of porous carbon was directly taken and placed into a CVD vapor deposition furnace. Firstly, argon gas was introduced with the temperature raising to 400°C and subsequently, silane gas was introduced at a flow rate of 200 sccm for 5 h each. After completion, the introduction of silane was stopped, and the temperature was raised to 550°C. Acetylene gas was introduced at a flow rate of 120 sccm, and the acetylene cracking duration was controlled to 1 h. The acetylene flow was then stopped, with cooling to obtain the silicon-carbon particles containing no recessed portions, and the SEM image of the outer surface of the carbon particles was as shown in FIG. 2.

### Comparative Example 2

Comparative Example 2 was conducted with reference to Example 2, with the only difference being the change in (2) Preparation of silicon-carbon particles, specifically: the fluidization temperature, fluidization gas flow rate, and fluidization time of the gas-phase fluidized bed apparatus were adjusted so that the number N of recessed portions on the surface of the silicon-carbon particles = 1, and the diameter of the recessed portions = 7 µm, see Table 1 for details.

### Comparative Example 3

Comparative Example 3 was conducted with reference to Example 2, with the only difference being the change in (2) Preparation of silicon-carbon particles, specifically: the fluidization temperature, fluidization gas flow rate, and fluidization time of the gas-phase fluidized bed apparatus were adjusted so that the number N of recessed portions on the surface of the silicon-carbon particles = 1, and the depth of the recessed portions = 7000 nm, see Table 1 for details.

**Table 1**

| Group | Average number N of recessed portions on surface of silicon-carbon particles | Average diameter of recessed portions/ µm | Average depth of recessed portions/ nm | Average particle size of silicon-carbon particles /um | Median particle size Dv50 of silicon-carbon particle s/µm | Change rate of median particle size Dv50 of silicon-carbon particles after being subjected to 377 MPa pressure/% | Change rate of sphericity of silicon-carbon particles after being subjected to 377 MPa pressure/% | Content C of elemental silicon in negative electrode active coating/% | N/C |
|---|---|---|---|---|---|---|---|---|---|
| Example 1 | 14 | 0.5 | 300 | 7 | 9 | 5 | 3 | 4.9 | 2.86 |
| Example 2 | 8 | 1 | 800 | 7 | 9 | 3 | 1 | 4.9 | 1.63 |
| Example 3 | 16 | 0.1 | 50 | 7 | 9 | 6 | 2 | 4.9 | 3.27 |
| Example 4-1 | 4 | 3 | 1100 | 7 | 9 | 8 | 8 | 4.9 | 0.82 |
| Example 4-2 | 20 | 0.05 | 10 | 7 | 9 | 7 | 6 | 4.9 | 4.08 |
| Example 4-3 | 1 | 5 | 1200 | 7 | 9 | 15 | 10 | 4.9 | 0.20 |
| Example 5-1 | 14 | 0.5 | 300 | 5 | 7 | 4 | 2 | 4.9 | 2.86 |
| Example 5-2 | 14 | 0.5 | 300 | 15 | 20 | 10 | 9 | 4.9 | 2.86 |
| **Example** 5-3 | 14 | 0.5 | 300 | 3 | 5 | 3 | 1 | 4.9 | 2.86 |
| Example 5-4 | 14 | 0.5 | 300 | 20 | 25 | 14 | 10 | 4.9 | 2.86 |
| Example 6-1 | 14 | 0.5 | 300 | 7 | 9 | 5 | 3 | 3 | 4.67 |
| Example 6-2 | 14 | 0.5 | 300 | 7 | 9 | 5 | 3 | 70 | 0.2 |
| Example 6-3 | 14 | 0.5 | 300 | 7 | 9 | 5 | 3 | 30 | 0.47 |
| Example 6-4 | 14 | 0.5 | 300 | 7 | 9 | 5 | 3 | 50 | 0.28 |
| Example 7-1 | 1 | 5 | 1200 | 7 | 9 | 15 | 10 | 70 | 0.01 4 |
| Example 7-2 | 20 | 0.05 | 10 | 7 | 9 | 7 | 6 | 1.5 | 13.3 3 |
| Comparative Example 1 | 0 | / | / | 7 | 9 | 2 | 1 | 4.9 | 0 |
| Comparative Example 2 | 1 | 7 | 5000 | 15 | 20 | 20 | 12 | 4.9 | 0.20 |
| Comparative Example 3 | 1 | 8 | 7000 | 15 | 20 | 22 | 14 | 4.9 | 0.20 |
| Comparative Example 4 | 1 | 5 | 5500 | 15 | 20 | 18 | 11 | 4.9 | 0.20 |

In Table 1, for Comparative Example 1, the silicon-carbon particles did not have recessed portions, so there were no values for the depth and diameter of recessed portions, uniformly represented by "/".

### Test examples

### 1) Test of capacity retention rate after cycling:

At room temperature, the batteries prepared in the above examples and comparative examples were charged to 4.53V at a constant current and constant voltage of 0.5C or 3C, with a cutoff current of 0.05C. The batteries were then discharged to 3.0V at 0.5C. After cycling for 500 cycles, the capacity retention rate after 500 cycles was calculated using the following formula: Battery capacity retention rate (%) = Final capacity/Initial capacity * 100%.

### 2) Test of expansion rate after cycling:

At room temperature, the batteries prepared in the above examples and comparative examples were charged to 4.53V at a constant current and constant voltage of 0.5C or 3C, with a cutoff current of 0.05C. The batteries were then discharged to 3.0V at 0.5C. After cycling for 500 cycles, the swelling rate was calculated using the following formula: Battery expansion rate (%) = (THK1 - THK0)/THK0 × 100%; where THK0 is the initial thickness of the battery at 3.85V measured with 600g PPG, and THK1 is the thickness of the battery after cycling in a fully charged state.

### 3) Thickness of SEI film on particle surface after cycling:

At room temperature, the batteries prepared in the above examples and comparative examples were charged to 4.53V at a constant current and constant voltage of 0.5C or 3C, with a cutoff current of 0.05C. The batteries were then discharged to 3.0V at 0.5C. After cycling for 500 cycles, the cells were disassembled in a fully charged state. The electrode plates with intact appearance were taken and preserved. The cross-section of the negative electrode plate was polished using Ar ion. Observation was conducted in an SEM backscatter mode. The light-colored areas of the particles were Si (a high atomic number element), and the dark areas were side reaction products SEI (composed of low atomic number elements). SEM was used to observe the state of the SEI on the particle surface and measure the thickness of the SEI film on the particle surface (values were taken at multiple points and the average was calculated), in nm. 4) Characterization of fluorine element in SEI film on particle surface after cycling:

At room temperature, the batteries prepared in the above examples and comparative examples were charged to 4.53V at a constant current and constant voltage of 0.5C or 3C, with a cutoff current of 0.05C. The batteries were then discharged to 3.0V at 0.5C. After cycling for 500 cycles, the cells were disassembled in a fully charged state. The electrode plates with intact appearance were taken. SEM was used to perform EDS (elemental analysis) area scanning on the CP electrode plate. The scanning results showed that the SEI layer on the particle surface contained a relatively high amount of F element, and the mass content of fluorine element in the SEI film (in %) was obtained.

The test results of the above test examples were recorded in Table 2.

**Table 2**

| Group | capacity retention rate of battery after 500T cycles/% | cycling expansion rate of battery after 500T cycles/% | Average thickness of SEI film on surface of silicon-carbon particle/nm | Content of fluorine element in SEI film on surface of silicon-carbon particle/% |
|---|---|---|---|---|
| Example 1 | 93.2 | 7.8 | 681 | 10.3 |
| Example 2 | 93.1 | 7.9 | 695 | 9.9 |
| Example 3 | 93.9 | 7.5 | 657 | 11.0 |
| Example 4-1 | 92.3 | 8.9 | 710 | 8.5 |
| Example 4-2 | 92.4 | 9.0 | 715 | 8.3 |
| Example 4-3 | 91.6 | 9.8 | 730 | 8.0 |
| Example 5-1 | 92.5 | 8.8 | 711 | 8.8 |
| Example 5-2 | 92.7 | 8.7 | 705 | 8.9 |
| Example 5-3 | 90.6 | 10.3 | 744 | 7.9 |
| Example 5-4 | 91.0 | 9.9 | 733 | 7.7 |
| Example 6-1 | 92.0 | 8.5 | 709 | 9.0 |
| Example 6-2 | 91.7 | 10.2 | 741 | 7.8 |
| Example 6-3 | 92.9 | 8.1 | 702 | 9.5 |
| Example 6-4 | 92.8 | 9.8 | 707 | 9.6 |
| Example 7-1 | 90.5 | 11.8 | 770 | 6.7 |
| Example 7-2 | 89.5 | 10.5 | 740 | 7.5 |
| Comparative Example 1 | 36.7 | 25.8 | 1533 | 1.5 |
| Comparative Example 2 | 65.4 | 18.6 | 1067 | 2.1 |
| Comparative Example 3 | 62.9 | 18.8 | 1086 | 2.2 |
| Comparative Example 4 | 65.5 | 18.4 | 1072 | 1.6 |

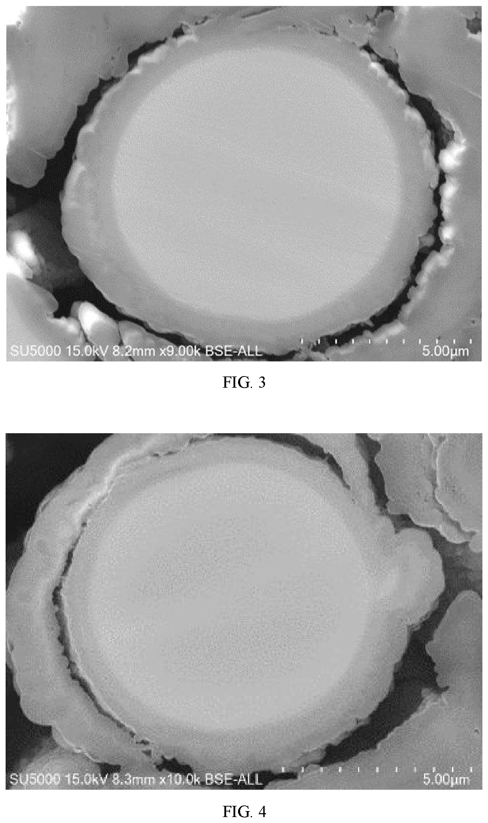

According to the test methods of the above test examples, the batteries prepared in the above examples and comparative examples were charged to 4.53V at a constant current and constant voltage of 0.5C or 3C at room temperature, with a cutoff current of 0.05C, and then discharged to 3.0V at 0.5C, and cycled for 500 cycles, the cross-sectional SEM morphology image of the silicon-carbon particles in Example 1 was shown in FIG. 3, where the SEI film did not detach. The cross-sectional SEM morphology image of the silicon-carbon particles in Comparative Example 1 was shown in FIG. 4, where the SEI film was relatively thick, and near the outer side, the SEI film showed fracture and detachment.

The preferred embodiments of the present disclosure have been described in detail above; however, the present disclosure is not limited thereto. Within the technical concept of the present disclosure, various simple modifications can be made to the technical solution of the present disclosure, including the combination of various technical features in any other suitable way. These simple modifications and combinations should also be regarded as the content disclosed by the present disclosure and all fall within the scope of protection of the present disclosure.

## Claims

1. Silicon-carbon particles, wherein the surface of the silicon-carbon particles has recessed portions;
the average number N of the recessed portions on the surface of each of the silicon-carbon particles is greater than or equal to 1;
the average diameter of the recessed portions is greater than or equal to 0.05 µm and less than or equal to 5 µm;
the average depth of the recessed portions is greater than or equal to 10 nm and less than or equal to 5 µm.

2. The silicon-carbon particles according to claim 1, wherein the average number N of the recessed portions on the surface of each of the silicon-carbon particles is greater than or equal to 4 and less than or equal to 20.

3. The silicon-carbon particles according to claim 1 or 2, wherein the average diameter of the recessed portions is greater than or equal to 0.1 µm and less than or equal to 2 µm; and/or, the average depth of the recessed portions is greater than or equal to 50 nm and less than or equal to 1 µm.

4. The silicon-carbon particles according to any one of claims 1-3, wherein the average particle size of the silicon-carbon particles is greater than or equal to 4 µm and less than or equal to 18 µm; preferably greater than or equal to 6 µm and less than or equal to 15 µm; and/or,
the median particle size Dv50 of the silicon-carbon particles is greater than or equal to 5 µm and less than or equal to 25 µm; preferably greater than or equal to 8 µm and less than or equal to 20 µm.

5. The silicon-carbon particles according to any one of claims 1-4, wherein the average sphericity of the silicon-carbon particles is greater than or equal to 0.5 and less than or equal to 1; preferably greater than or equal to 0.85 and less than or equal to 1.

6. The silicon-carbon particles according to any one of claims 1-5, wherein based on the total mass of the silicon-carbon particles, the mass content of elemental silicon is greater than or equal to 35% and less than or equal to 80%; and/or,
the silicon-carbon particles comprise a porous carbon matrix and nano-silicon dispersed within the pores of the porous carbon matrix, the nano-silicon having a crystallite size of greater than or equal to 1 nm and less than or equal to 100 nm.

7. The silicon-carbon particles according to claim 4, wherein the change rate of the median particle size Dv50 of the silicon-carbon particles after being subjected to a pressure of 377 MPa is less than or equal to 15%; preferably greater than or equal to 2% and less than or equal to 8%.

8. The silicon-carbon particles according to claim 5, wherein the change rate of the sphericity of the silicon-carbon particles after being subjected to a pressure of 377 MPa is less than or equal to 10%; preferably greater than or equal to 1% and less than or equal to 4%.

9. A method for preparing the silicon-carbon particles according to any one of claims 1-8, wherein the method comprises: soaking a porous carbon matrix in a potassium hydroxide solution for a surface treatment, then placing the porous carbon matrix subjected to the surface treatment into a vapor deposition furnace, introducing argon gas and raising the temperature to greater than or equal to 800°C and less than or equal to 1200°C, thereby generating recessed portions on the surface of the porous carbon matrix, and finally introducing a silicon source gas to deposit nano-silicon within the pores of the porous carbon matrix.

10. A method for preparing the silicon-carbon particles according to any one of claims 1-8, comprising placing a porous carbon matrix into a gas-phase fluidized bed apparatus for a surface fluidization collision treatment, thereby generating recessed portions on the surface of the porous carbon matrix, then placing the material subjected to the surface fluidization collision treatment into a vapor deposition furnace and introducing a silicon source gas to deposit nano-silicon within the pores of the porous carbon matrix.

11. A method for preparing the silicon-carbon particles according to any one of claims 1-8, comprising placing a porous carbon matrix into a ball mill for a ball milling surface modification treatment, thereby generating recessed portions on the surface of the porous carbon matrix, then placing the material subjected to the ball milling surface modification treatment into a vapor deposition furnace and introducing a silicon source gas to deposit nano-silicon within the pores of the porous carbon matrix.

12. A negative electrode plate, wherein the negative electrode plate comprises the silicon-carbon particles according to any one of claims 1-8 and/or the silicon-carbon particles prepared by the method according to any one of claims 9-11;
the negative electrode plate comprises a negative electrode active coating, the negative electrode active coating comprising the silicon-carbon particles; the ratio N/C of the average number N of the recessed portions on the surface of each of the silicon-carbon particles to the content C% of elemental silicon in the negative electrode active coating is greater than or equal to 0.04 and less than or equal to 10;
preferably, C% is greater than or equal to 3% and less than or equal to 70%.

13. A battery, wherein the battery comprises a negative electrode plate and an electrolyte, the negative electrode plate being the negative electrode plate according to claim 12;
the electrolyte comprises a fluorine-containing additive, the fluorine-containing additive comprising at least one of fluoroethylene carbonate, LiBF₄, LiCF₃SO₃, Li(CF₃SO₂)₂N, LiPO₂F₂ and LiDFOB.

14. The battery according to claim 13, wherein after the battery is cycled for 300 cycles under the conditions of 25°C, a charge/discharge cutoff voltage of greater than or equal to 3.0V and less than or equal to 4.53V, 1C charge, and 1C discharge, and then disassembled in a fully charged state:
the average thickness of the SEI film on the surface of the silicon-carbon particles is greater than or equal to 100 nm and less than or equal to 800 nm; preferably greater than or equal to 300 nm and less than or equal to 700 nm.

15. The battery according to claim 13 or 14, wherein the content of a fluorine element in the SEI film on the surface of the silicon-carbon particles is greater than or equal to 1% and less than or equal to 15%.
